# EUROPEAN PATENT APPLICATION

(11) **EP 0 986 063 A2**
(43) Date of publication of application: **15.03.2000**
(21) Application number: 99202877.9
(22) Date of filing: 03.09.1999
(51) Int. Cl.: G11B 33/04

(54) **Box for storing mass information carriers such as compact discs**

(30) Priority: 03.09.1998 NL 1010002
(71) Applicant: HV - T.R.S. B.V., 6191 SB Beek (NL)
(72) Inventor: Lau,Kwok Din, Chaiwan, HONG KONG (CN)
(74) Representative: Ottevangers, Sietse Ulbe

(57) **Abstract**

Box for storing mass information carriers provided with a central opening bounded by an opening edge, such as audio compact discs, digital video compact discs, CD-roms and the like, which box comprises at least one tray having a clamping piece for clamping a mass information carrier on either side of the tray through engagement of the opening edge, the clamping piece having a considerable firmness and being properly resistant to impact loads due to, inter alia, the presence of circular segment-shaped wall parts.

## Description

The invention relates to a box according to the preamble of claim 1.

Such box is known from German patent specification DE-C-195 05 230. The box comprises a bottom part, a cover part and a tray. Provided in the tray is a clamping piece suitable for clamping a mass information carrier on each side of the tray through engagement of the opening edge. The tray comprises a principal plane wall. In this principal plane wall, an opening has been provided in which a central ring is included. By means of ribs, the central ring is connected to the principal plane wall. There are further provided clamping elements intended for engaging the opening edge of a mass information carrier. Via a resilient arm, these clamping elements are connected to the central ring. Adjacent a side thereof facing the central ring, the ribs are provided with thickenings which should give the clamping pieces some protection. From practice, the clamping piece known from the German patent specification proves to be insufficiently firm. When a user drops the box, there is a reasonable chance that the ribs, which are of particularly slender design, break. In that event, the entire clamping piece falls from the central principal plane wall. This renders the box unusable. In particular Fig. 7 of the German patent specification shows in what fragile manner the entire carrying construction for two CDs is connected to the principal plane wall of the tray.

The object of the invention is to provide a box without the above-described drawbacks. To that end, the box according to the invention is characterized by the features of claim 1.

Through the presence of the circular segment-shaped wall parts and the considerable height of the ribs, the circular segment-shaped wall parts, as well as the central ring, there is provided a clamping piece of a considerable firmness. As the circular segment-shaped wall parts are connected to the principal plane wall part over their entire base, the entire clamping piece is particularly firm and insusceptible to impact loads. Around the clamping piece, the principal plane wall preferably comprises an annular thickening on both sides thereof. The annular thickening around the clamping piece provides a projecting support face for the mass information carriers to be fitted onto the clamping piece.

Further elaborations of the invention are described in the subclaims and will hereinafter be specified on the basis of two exemplary embodiments, with reference to the accompanying drawings.
Fig. 1 is a perspective view of a first exemplary embodiment of a clamping piece forming part of a box according to the invention;
Fig. 2 is a perspective view of the clamping piece shown in Fig. 1 with a partially broken-away part;
Fig. 3 shows a second exemplary embodiment of a clamping piece forming part of a box according to the invention;
Fig. 4 is a perspective view of the clamping piece shown in Fig. 3 with a partially broken-away part.

The two clamping pieces shown form part of a box for storing mass information carriers provided with a central opening bounded by an opening edge, such as audio compact discs, digital video compact discs, CD-roms, laser discs and the like. In general, such boxes comprise a tray provided with a clamping piece. The present invention particularly relates to a box comprising a tray provided with a clamping piece for clamping a mass information carrier on each side of the tray by engaging the opening edge.

Hereinbelow, for both exemplary embodiments, the same reference numerals will be used for corresponding parts.

In both exemplary embodiments, the tray comprises a principal plane wall 1. Located in this principal plane wall 1 is a clamping piece provided with a central ring 2 included in the central opening 3. Via ribs 4, the central ring 2 is connected to the principal plane wall 1. The ribs 4 extend from the central ring 2 in radial direction and are evenly distributed over the circumference of the ring 2 in spaced relation. Between at least a number of ribs 4 which lie side by side in circumferential sense, clamping elements 5 extend on either side of the principal plane wall 1, which clamping elements extend substantially perpendicularly to the principal plane wall 1. On either side of the clamping elements 5, recesses 6 have been provided in the principal plane wall 1, so that the clamping elements 5 are each connected to this principal plane wall 1 via a resilient arm 7 forming an integral part of the principal plane wall 1. To provide a firm support face for the mass information carrier in the condition in which it is clamped on the clamping piece, which support face cannot damage the mass information carrier, an annular thickening 8 has been provided in the principal plane wall 1, on either side thereof. In order to minimize the chance of breaking of the clamping elements 5, circular segment-shaped wall parts 9 extend between the clamping elements 5, which circular segment-shaped wall parts extend substantially perpendicularly to the principal plane wall 1 and have substantially the same height relative to the principal plane wall 1 as the clamping elements 5. The imaginary center of the circle partly described by the circular segment-shaped wall parts 9 coincides with the center of the central ring 2. To provide the entire clamping piece with a considerable firmness, it is preferred that the ribs 4 and the central ring 2 likewise have a height which substantially corresponds to the height of the clamping elements 5. Due to this construction, the clamping elements 5 are in fact completely embedded between firm plastic elements such as the ribs 4, the circular segment-shaped wall parts 9 and the central ring 2. This minimizes the risk of the clamping elements 5 breaking, for instance when a user drop the box on the ground.

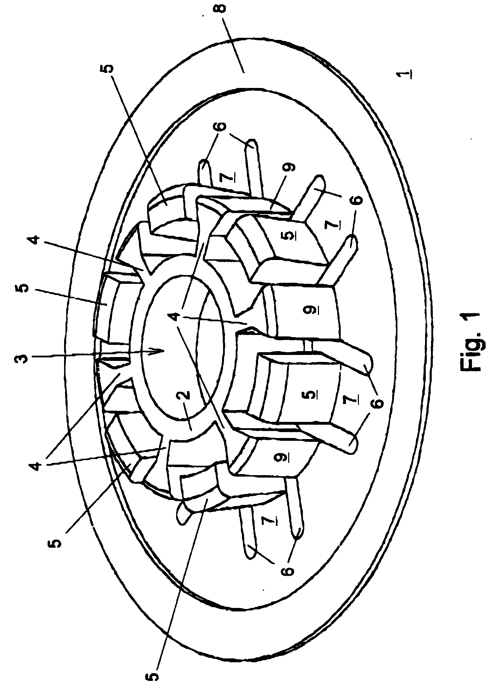

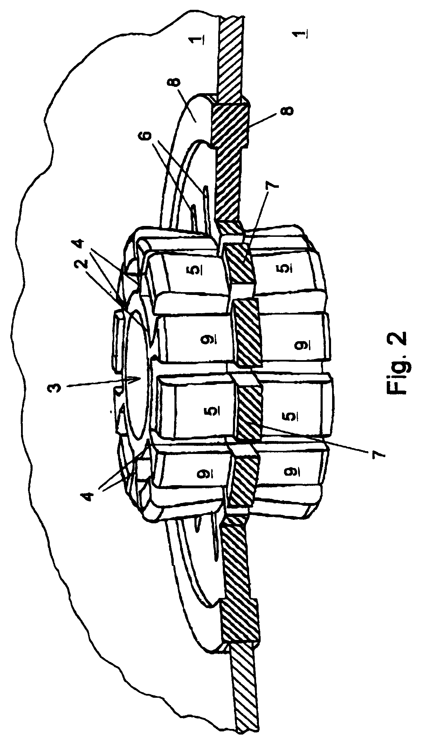

In the exemplary embodiment of Figs. 1 and 2, a clamping element 5 is present between each pair of successive ribs 4. The circular segment-shaped walls 9 form an integral part of the ribs 4 arranged between two clamping elements.

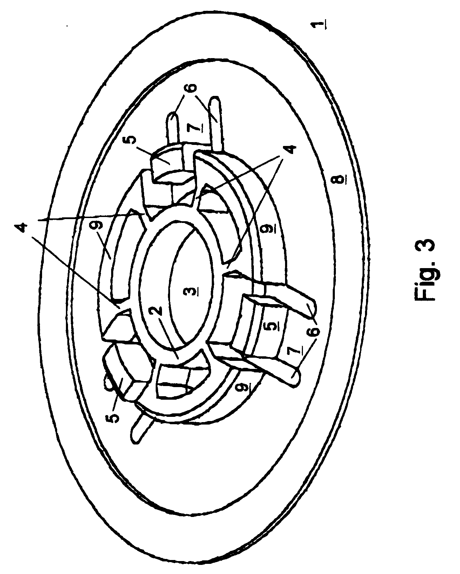

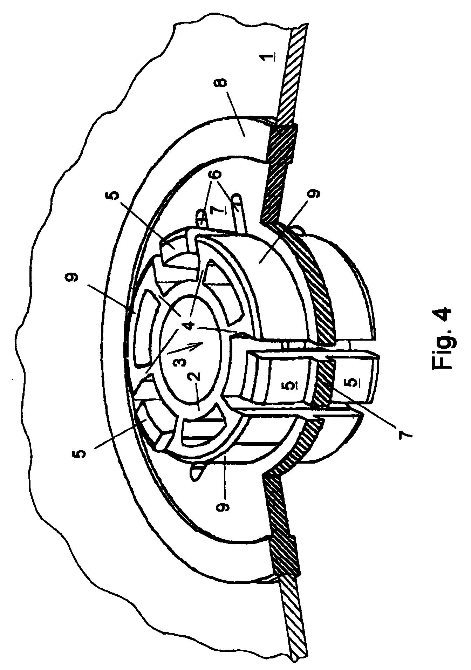

In the exemplary embodiment of Figs. 3 and 4, only three pairs of clamping elements 5 have been provided on each side of the principal plane wall 1, while six ribs 4 are present. In this exemplary embodiment, in each case two successive ribs 4 are connected to a circular segment-shaped wall part 9. For both constructions, it applies that they can be manufactured by means of an injection-molding process.

It is understood that the invention is not limited to the exemplary embodiments described, but that various modifications are possible within the framework of the invention. In an alternative embodiment, the clamping elements 5 could be connected via a resilient arm to the central ring 2 instead of the principal plane wall 1.

## Claims

1. A box for storing mass information carriers provided with a central opening bounded by an opening edge, such as audio compact discs, digital video compact discs, CD-roms and the like, said box comprising at least one tray having a clamping piece for clamping a mass information carrier on each side of the tray through engagement of the opening edge, the tray comprising a principal plane wall (1) in which the clamping piece is included, said clamping piece being provided with a central opening (3) in which a central ring (2) is included, the central ring (2) being connected via ribs (4) to the principal plane wall (1), the ribs (4) extending from the central ring (2) in radial direction and being distributed over the circumference of the central ring (2) in spaced relation, the clamping piece between at least a number of ribs (4) which lie side by side in circumferential sense comprising clamping elements (5) extending in pairs upwards and downwards on either side of the principal plane wall (1), substantially perpendicularly to the principal plane wall (1) and designed for engaging the central opening edge of a mass information carrier, **characterized in that** the clamping piece comprises circular segment-shaped wall parts (9) extending between the clamping elements (5) on either side of and substantially perpendicularly to the principal plane wall (1) and having substantially the same height relative to the principal plane wall (1) as the clamping elements (5), the imaginary center of the imaginary circle described by the circular segment-shaped wall parts (9) coinciding with the imaginary center of the central ring (2), and circular segment-shaped wall parts (9) being connected to the principal plane wall (1) over the entire length of their base.

2. A box according to claim 1, characterized in that the central ring (2) and the ribs (4) also have a height relative to the principal plane wall (1) which substantially corresponds to the height of the clamping elements (5) relative to the principal plane wall (1).

3. A box according to claim 1 or 2, characterized in that each circular segment-shaped wall part (9) forms an integral part of an end of a rib (4) remote from the central ring (2), while between each pair of ribs (4) lying side by side in circumferential sense, a pair of clamping elements (5) is arranged.

4. A box according to claim 1 or 2, characterized in that each circular segment-shaped wall part (9) interconnects two ribs (4) lying side by side in circumferential sense.

5. A box according to any one of the preceding claims, characterized in that on either side of the principal plane wall (1), an annular thickening (8) is concentrically provided around the clamping piece.

6. A box according to any one of the preceding claims, characterized in that on either side of each pair of upwardly and downwardly extending clamping elements (5), recesses (6) are provided in the principal plane wall (1) to form a resilient arm (7) by means of which each pair of clamping elements (5) is connected to the principal plane wall (1).

7. A box according to any one of claims 1-5, characterized in that each pair of clamping elements (5) comprises a resilient arm connected to the central ring (2).
